# EUROPEAN PATENT APPLICATION

(11) **EP 4 847 333 A1**
(43) Date of publication of application: **02.12.2026**
(21) Application number: 25744626.0
(22) Date of filing: 22.01.2025
(51) Int. Cl.: B60W 10/06, B60W 20/50, B60W 50/029, F02N 11/08

(54) **ENGINE STARTING CONTROL METHOD AND VEHICLE**

(30) Priority: 22.01.2024 CN 202410086107; 22.01.2024 CN 202410090571
(71) Applicant: Great Wall Motor Company Limited, Baoding, Hebei 071000 (CN)
(72) Inventor: ZHOU, Bo, Baoding, Hebei 071000 (CN)
(74) Representative: Klunker IP Patentanwälte PartG mbB
(86) International application number: PCT/CN2025/074021
(87) International publication number: WO 2025/157188

(57) **Abstract**

An engine starting control method, comprising: determining that a vehicle operating mode is a pure electric mode, and determining a starter state to obtain a starter state result; in response to the starter state result being an available state, adjusting a reserved torque from a default value to a zero value, and when an engine starting condition is met, using a starter to start an engine, wherein the reserved torque is a torque used by a motor to start the engine; and in response to the starter state result being an unavailable state, adjusting the reserved torque to a first torque value less than or equal to the default value, and when the engine starting condition is met, using the motor to start the engine on the basis of the first torque value. Also disclosed is a vehicle.

## Description

The present disclosure claims priority to Chinese Patent Application No. CN202410086107.6, entitled "ENGINE STARTING CONTROL METHOD, APPARATUS, ELECTRONIC DEVICE, AND VEHICLE", filed on January 22, 2024 with the China National Intellectual Property Administration, which is incorporated herein by reference in its entirety.

The present disclosure claims priority to Chinese Patent Application No. CN202410090571.2, entitled "ENGINE STARTING CONTROL METHOD, APPARATUS, ELECTRONIC DEVICE, AND VEHICLE", filed on January 22, 2024 with the China National Intellectual Property Administration, which is incorporated herein by reference in its entirety.

### TECHNICAL FIELD

The present disclosure relates to the field of vehicle control, and in particular, to a method for controlling starting of an engine and a vehicle.

### BACKGROUND

With the development of hybrid vehicles, an engine needs to be started in response to a vehicle being switched from a pure electric mode to a hybrid mode. The inventors have found that during the starting of the engine, the engine may fail to start due to reasons such as insufficient power transmitted to the engine. However, reserving excessive torque for starting the engine also leads to a decrease in the overall power performance of the vehicle.

In view of this, how to ensure power performance while avoiding insufficient torque during the starting of the engine has become an urgent technical problem to be solved.

### SUMMARY

In view of this, the purpose of the present disclosure is to provide a method for controlling starting of an engine and a vehicle, which ensure a sufficient torque to start the engine while ensuring power performance.

Based on the above purpose, a first aspect of the present disclosure provides a method for controlling starting of an engine, the method including:
determining, in response to determining that an operating mode of a vehicle is a pure electric mode, a state of a starter to obtain a state result of the starter;
in response to the state result of the starter being an available state, adjusting a reserved torque from a preset default torque to zero, and starting the engine by using the starter in response to a start condition of the engine being satisfied, where the reserved torque is for starting the engine by using an electric motor; and
in response to the state result of the starter being an unavailable state, adjusting the reserved torque to a first torque smaller than or equal to the default torque, and starting the engine by using the electric motor based on the first torque in response to the start condition of the engine being satisfied.

Based on the same inventive concept, a second aspect of the present disclosure provides an apparatus for controlling starting of an engine, the apparatus including:
a determination module, configured to determine, in response to determining that an operating mode of a vehicle is a pure electric mode, a state of a starter to obtain a state result of the starter;
a first engine start module, configured to, in response to the state result of the starter being an available state, adjust a reserved torque from a preset default torque to zero, and start the engine by using the starter in response to a start condition of the engine being satisfied, where the reserved torque is for starting the engine by using an electric motor; and
a second engine start module, configured to, in response to the state result of the starter being an unavailable state, adjust the reserved torque to a first torque smaller than or equal to the default torque, and start the engine by using the electric motor based on the first torque in response to the start condition of the engine being satisfied.

Based on the same inventive concept, a third aspect of the present disclosure provides an electronic device, where the electronic device includes a memory, a processor, and a computer program stored on the memory and executable by the processor, where the processor implements the method described above when executing the computer program.

Based on the same inventive concept, a fourth aspect of the present disclosure provides a vehicle, where the vehicle includes the apparatus for controlling starting of the engine described in the second aspect, or the electronic device described in the third aspect, or a storage medium described in a fourth aspect.

As can be seen from the above, the present disclosure provides a method and an apparatus for controlling starting of an engine, an electronic device, and a vehicle. An operating mode of the vehicle is determined to be a pure electric mode. In response to a state result of a starter being an available state, a reserved torque is adjusted from a preset default torque to zero, i.e., no torque is reserved from a drive torque used for vehicle driving, and the entire drive torque can be used for vehicle driving, which can ensure the power performance and drivability of the entire vehicle in the pure electric mode, optimize the driving experience of a user in the pure electric mode, and start the engine by using the starter in response to a start condition of the engine being satisfied, thereby avoiding a situation where the engine cannot be started due to the reserved torque being adjusted to zero. In response to the state result of the starter being an unavailable state, the reserved torque is adjusted to a first torque smaller than or equal to the default torque, i.e., a smaller torque is reserved from the drive torque for starting the engine, thereby ensuring the power performance of the entire vehicle in the pure electric mode to a maximum extent. When the vehicle is switching from the pure electric mode to a hybrid mode, an initial start torque is transmitted to the engine by using a clutch, a current state of the clutch is determined based on an electric-motor speed and an engine speed. The starting of the engine is controlled based on the current state and the initial start torque, and the initial start torque for starting the engine is adjusted based on the current state, thereby ensuring that the torque transmitted to the engine via the clutch can smoothly start the engine, reducing the probability of a failed engine start due to poor clutch transmission capability or feedback information distortion while ensuring sufficient power performance, avoiding the situation of a failed engine start due to clutch abnormality to a maximum extent, and ensuring the driving experience of the user.

### BRIEF DESCRIPTION OF THE DRAWINGS

In order to more clearly illustrate the technical solutions in the present disclosure or the related art, the drawings required for the description of the embodiments or the related art will be briefly introduced below. The drawings in the following description are only some embodiments of the present disclosure; for a person of ordinary skill in the art, other drawings can also be obtained based on these drawings without creative effort.
FIG. 1 is a flowchart of a method for controlling starting of an engine according to an embodiment of the present disclosure;
FIG. 2 is a flowchart of controlling starting of an engine when a vehicle is switching to a hybrid mode according to an embodiment of the present disclosure;
FIG. 3 is a schematic structural diagram of an apparatus for controlling starting of an engine according to an embodiment of the present disclosure; and
FIG. 4 is a schematic structural diagram of an electronic device according to an embodiment of the present disclosure.

### DETAILED DESCRIPTION OF THE EMBODIMENTS

In order to make the objectives, technical solutions, and advantages of the present disclosure clearer, the present disclosure will be further described in detail below in conjunction with specific embodiments and with reference to the accompanying drawings.

Unless otherwise defined, the technical terms or scientific terms used in the embodiments of the present disclosure shall have the usual meanings understood by a person with ordinary skill in the art to which the present disclosure belongs. The words "first", "second", and the like used in the embodiments of the present disclosure do not indicate any order, quantity, or importance, but are merely used to distinguish different components. The words "include" or "comprise" and the like mean that the elements or items preceding the word encompass the elements or items listed after the word and their equivalents, without excluding other elements or items. The words "connect" or "link" and the like are not limited to physical or mechanical connections, but may include electrical connections, whether direct or indirect. "Up", "down", "left", "right", etc., are only used to indicate relative positional relationships, and when the absolute position of the described object changes, the relative positional relationship may also change accordingly.

Based on the description of the background art, a traditional P2 architecture vehicle has a pure electric mode and a hybrid mode. When the vehicle switches to the pure electric mode, the engine is almost non-intervening. However, the existence of a reserved torque results in poor power performance of the vehicle during travelling in the pure electric mode, which is unable to satisfy a power requirement for the vehicle of a user, and affects the driving experience of the user. Moreover, when a traditional plug-in hybrid electric vehicle (i.e., a P2 architecture vehicle) starts the engine by using an electric motor, a P2 motor is required to drag the engine via a K0 clutch, and then the ignition is performed. When the K0 clutch is abnormal, it may not be able to accurately respond to the request of a Power Domain Control Unit (PDCU) of the vehicle, resulting in failure to successfully start the engine, failure to successfully intervene the engine, and affecting the vehicle experience of the user.

Therefore, in order to ensure a sufficient torque to start the engine while ensuring power performance, the technical solutions of the embodiments of the present disclosure are provided.

As described above, how to avoid reserving some torque from a drive torque, which would result in poor vehicle power performance in the pure electric mode, has become an important research problem.

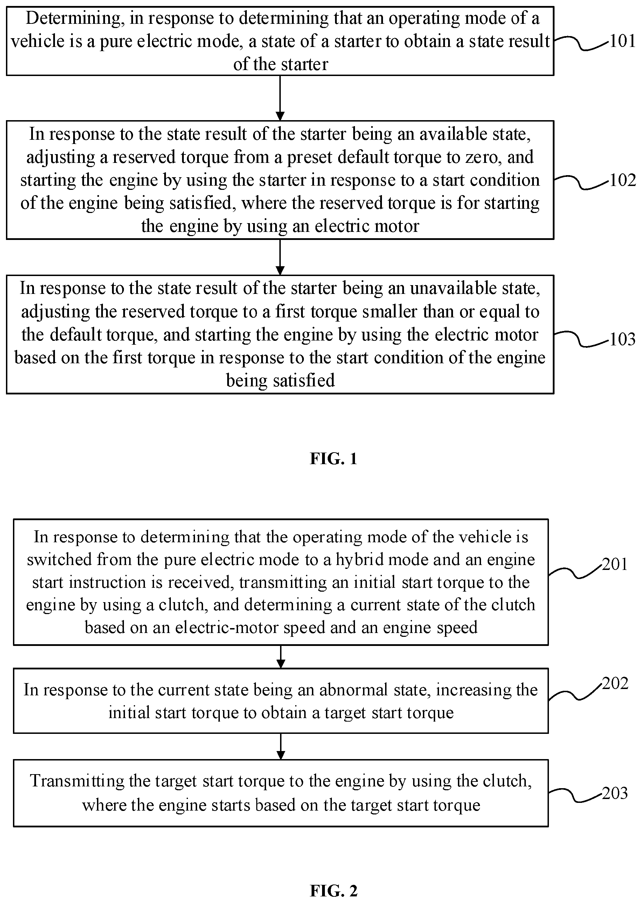

Based on the above description, as shown in FIG. 1, the method for controlling the starting of the engine provided in this embodiment includes the following steps.

In step 101, in response to determining that an operating mode of a vehicle is a pure electric mode, a state of a starter is determined to obtain a state result of the starter.

During specific implementation, a plug-in hybrid electric vehicle primarily uses an engine, with an electric motor as a secondary component. For the plug-in hybrid electric vehicle, the operating mode of the vehicle includes: a pure electric mode and a hybrid mode.

When an operating mode of the vehicle is a pure electric mode, a state of a starter is determined to obtain a state result of the starter, to determine a start mode of the engine based on the state result. The starter, also known as a starter motor, converts electrical energy of an auxiliary battery into mechanical energy, driving an engine flywheel to rotate to start the engine. For example, the auxiliary battery can be a 12V battery, and the starter can be a 12V starter.

Specifically, determining the state of the starter to obtain the state result of the starter can be performed in the following methods. The determination method includes: determining whether the starter has a fault to obtain the state result of the starter; and/or determining whether the auxiliary battery corresponding to the starter has a fault to obtain the state result of the starter; and/or determining whether the starter failed to start in historical power-on/power-off cycles to obtain the state result of the starter.

The state result of the starter is determined to be an available state in response to the following three conditions being simultaneously satisfied: the starter has no fault, the auxiliary battery corresponding to the starter has no fault, and the starter has no start failure in historical power-on/power-off cycles. The state result of the starter is determined to be an unavailable state in response to at least one of three conditions being satisfied: the starter has a fault, the auxiliary battery corresponding to the starter has a fault, or the starter has a start failure in historical power-on/power-off cycles.

In step 102, in response to the state result of the starter being an available state, a reserved torque is adjusted from a preset default torque to zero, and the engine is started by using the starter in response to a start condition of the engine being satisfied, where the reserved torque is for starting the engine by using an electric motor.

During specific implementation, the reserved torque is a pre-set torque for starting the engine by using the electric motor (e.g., a P2 motor). That is, in the pure electric mode, in order to balance the driving of the overall vehicle and the starting of the engine, a part of the drive torque corresponding to the vehicle driving is reserved, which forms the reserved torque, and is used for starting the engine by using the electric motor. For example, if the drive torque of the vehicle is 600 N·m and a default reserved torque is 100 N·m, an actual available drive torque of the vehicle in the pure electric mode is 600 N·m - 100 N·m = 500 N·m, where the reserved torque of 100 N·m is used to start the engine by using the electric motor when the engine needs to be started. Thus, the actual available drive torque of the vehicle changes from 600 N·m to 500 N·m after reserving the default reserved torque, which reduces the power performance of the vehicle.

When the state result of the starter is the available state, the starter can be used to start the engine, and it is unnecessary to use the electric motor to start the engine based on the reserved torque. Therefore, when the state result of the starter is the available state, the reserved torque is no longer reserved from the drive torque of the vehicle, which can satisfy a higher requirement of the user for the drive torque, thereby ensuring the power performance of the vehicle in the pure electric mode.

For example, the drive torque of the vehicle is 600 N·m, and the default reserved torque is 100 N·m. Thus, the actual available drive torque of the vehicle is 600 N·m - 100 N·m = 500 N·m. When the required torque of the user during driving is 530 N·m, the actual available drive torque of the vehicle cannot satisfy the requirement of the user. When the state result of the starter is the available state, the reserved torque is adjusted from the preset default torque to zero. At this time, the actual available drive torque of the vehicle is 600 N·m, which can satisfy the required torque of the user being 530 N·m.

In step 103, in response to the state result of the starter being an unavailable state, the reserved torque is adjusted to a first torque smaller than or equal to the default torque, and the engine is started by using the electric motor based on the first torque in response to the start condition of the engine being satisfied.

During specific implementation, when the state result of the starter is the unavailable state, the engine cannot be started by using the starter, and the engine is required to be started by using the electric motor based on the reserved torque. In order to ensure the power performance during the driving of the overall vehicle while the electric motor is able to start the engine, the reserved torque is adjusted to a first torque smaller than or equal to the default torque. Thus, the first torque is for starting the engine by using the electric motor when the engine needs to be started. Since the first torque is smaller than or equal to the default torque, the power performance of the vehicle can be ensured to a maximum extent.

For example, the drive torque of the vehicle is 600 N·m, and the default reserved torque is 100 N·m. Thus, the actual available drive torque of the vehicle is 600 N·m - 100 N·m = 500 N·m. When the required torque of the user during driving is 530 N·m, the actual available drive torque of the vehicle cannot satisfy the requirement of the user. When the state result of the starter is the unavailable state, the reserved torque is adjusted to a first torque smaller than or equal to the default torque, e.g., the first torque is 50 N·m. At this time, the actual available drive torque of the vehicle is 550 N·m, which can satisfy the required torque of the user being 530 N·m. In this way, the power performance of the vehicle can be ensured to a maximum extent.

Specifically, when a Power Domain Control Unit (PDCU) of the vehicle recognizes a target operating condition in the pure electric mode requiring starting of the engine and the starter is unavailable, the engine is started by using the electric motor based on the first torque, ensuring that the engine can also be started when the starter is in the unavailable state.

In some embodiments, as shown in FIG. 2, the method for controlling the starting of the engine further includes the following steps.

In step 201, in response to determining that the operating mode of the vehicle is switched from the pure electric mode to a hybrid mode and an engine start instruction is received, an initial start torque is transmitted to the engine by using a clutch, and a current state of the clutch is determined based on an electric-motor speed and an engine speed.

During specific implementation, the pure electric mode is a mode in which the electric motor drives the vehicle alone, where the engine is in an off state in the pure electric mode. The hybrid mode is a mode in which the electric motor and the engine jointly drive the vehicle. When it is determined that the operating mode of the vehicle is switched from the pure electric mode to the hybrid mode, an engine start instruction is received for starting the engine, thereby realizing the switching of the operating mode of the vehicle.

When starting the engine, the clutch needs to be used to transmit the initial start torque to the engine. The initial start torque is an input torque at an input end of the clutch, which can be the torque reserved by the electric motor for starting the engine, or the torque output by the starter for starting the engine. Exemplarily, when using the electric motor to start the engine, after determining the initial start torque (which can be the first torque at this time), since when the plug-in hybrid electric vehicle is started, the electric motor is required to drag the engine via the clutch, and then the ignition is performed. The clutch can be a K0 clutch. That is, in response to the start condition of the engine being satisfied, the clutch needs to be used to transmit the initial start torque to the engine. When the clutch uses the initial start torque allocated by the electric motor to drag the engine to start, the current state of the clutch needs to be determined based on the electric-motor speed and the engine speed, to adjust the initial start torque for starting the engine based on the current state, ensuring that the torque transmitted to the engine via the clutch can smoothly start the engine, reducing the probability of a failed engine start due to poor clutch transmission capability or feedback information distortion while ensuring sufficient power performance, avoiding the situation of a failed engine start due to clutch abnormality to a maximum extent, and ensuring the driving experience of the user.

In step 202, in response to the current state being an abnormal state, the initial start torque is increased to obtain a target start torque.

During specific implementation, when the current state of the clutch is an abnormal state, the initial start torque is increased to obtain the target start torque. Specifically, the target start torque is obtained by adding a preset torque to the initial start torque.

The target start torque is obtained by summing the initial start torque and the preset torque. That is, the target start torque is obtained through increasing the initial start torque by the preset torque. The preset torque is a pre-set torque to be increased on the basis of the initial start torque.

For example, if the initial start torque is 50 N·m and the preset torque is 50 N·m, the target start torque is 50 N·m + 50 N·m = 100 N·m. If the initial start torque is 100 N·m and the preset torque is 100 N·m, the target start torque is 100 N·m + 100 N·m = 200 N·m. If the initial start torque is 150 N·m and the preset torque is 120 N·m, the target start torque is 150 N·m + 120 N·m = 270 N·m.

In step 203, the target start torque is transmitted to the engine by using the clutch, so that the engine starts based on the target start torque.

During specific implementation, the clutch uses the target start torque to drag the engine to start. In this way, when the current state of the clutch is an abnormal state, the target start torque, which is larger than the initial start torque, is used to drag the engine to start, to avoid a situation where the engine cannot be successfully dragged to start due to an excessively small initial start torque.

Through the above embodiments, when the current state of the clutch is an abnormal state, the initial start torque is increased to obtain the target start torque. The clutch is used to transmit the target start torque to the engine, so that the engine starts based on the target start torque. By using the increased target start torque to start the engine, the situation where the engine cannot be successfully dragged to start due to an excessively small initial start torque is avoided. The probability of a failed engine start due to poor clutch transmission capability or feedback information distortion can be reduced, the situation of a failed engine start due to clutch abnormality can be avoided to a maximum extent, and the driving experience of the user is ensured.

Through the above embodiment, an operating mode of the vehicle is determined to be a pure electric mode. In response to a state result of a starter being an available state, a reserved torque is adjusted from a preset default torque to zero, i.e., no torque is reserved from a drive torque used for vehicle driving, and the entire drive torque can be used for vehicle driving, which can ensure the power performance and drivability of the entire vehicle in the pure electric mode, optimize the driving experience of a user in the pure electric mode, and start the engine by using the starter in response to a start condition of the engine being satisfied, thereby avoiding a situation where the engine cannot be started due to the reserved torque being adjusted to zero. In response to the state result of the starter being an unavailable state, the reserved torque is adjusted to a first torque smaller than or equal to the default torque, i.e., a smaller torque is reserved from the drive torque for starting the engine, thereby ensuring the power performance of the entire vehicle in the pure electric mode to a maximum extent. When the vehicle is switching from the pure electric mode to a hybrid mode, an initial start torque is transmitted to the engine by using a clutch, a current state of the clutch is determined based on an electric-motor speed and an engine speed. The starting of the engine is controlled based on the current state and the initial start torque, and the initial start torque for starting the engine is adjusted based on the current state, thereby ensuring that the torque transmitted to the engine via the clutch can smoothly start the engine, reducing the probability of a failed engine start due to poor clutch transmission capability or feedback information distortion while ensuring sufficient power performance, avoiding the situation of a failed engine start due to clutch abnormality to a maximum extent, and ensuring the driving experience of the user.

In some embodiments, the auxiliary battery on the vehicle is respectively connected to the starter and a functional load, and an isolation relay is connected between the auxiliary battery and the functional load.

Step 102 includes the following steps.

In step 102A, in response to determining that the start condition of the engine is satisfied, power supplied to the functional load is cut off via the isolation relay, and the engine is started by using the starter.

During specific implementation, the starter can convert the electrical energy of the auxiliary battery into mechanical energy, driving the engine flywheel to rotate to achieve engine start. The electrical energy of the auxiliary battery can also be used to supply power to the functional load, so that the functional load of the vehicle can be operated using the electrical energy of the auxiliary battery. The functional load is a load required to be powered by the auxiliary battery, and the functional load includes at least one of: a lighting system, a sound system, and an auxiliary system. Specifically, the lighting system includes at least one of: headlights, rear taillights, turn signals, brake lights, illumination lights, and dashboard lights. The sound system includes at least one of: a radio, a speaker, and an alarm. The auxiliary system includes at least one of: a wiper, an air conditioner, and a heater. In addition, a functional assistance further includes: a control unit, a sensor, and an airbag of the vehicle.

The function of the isolation relay is to perform automatic regulation, safety protection, circuit switching, etc., on the vehicle's electrical equipment. By providing the isolation relay between the auxiliary battery and the functional load on the vehicle, the connection or disconnection between the auxiliary battery and the functional load can be controlled through the isolation relay.

When the state result of the starter is the available state, and the vehicle is in a target operating condition requiring starting of the engine in the pure electric mode, i.e., the vehicle needs to start the engine in the pure electric mode and the starter is available, the engine is started by the starter. Specifically, the isolation relay controls the disconnection between the auxiliary battery and the functional load, and controls the starter to start the engine. By opening the isolation relay, the entire vehicle is enabled to start the engine by using the starter during driving.

Specifically, when the Power Domain Control Unit (PDCU) of the vehicle recognizes a target operating condition in the pure electric mode requiring starting of the engine, a traditional start mode is actively selected to start the engine, i.e., it is determined to start the engine by using the starter, which does not occupy the driving capacity of the electric motor.

The target operating condition is an operating condition requiring starting of the engine in the pure electric mode of the vehicle. The target operating condition includes at least one of: a start condition, an idle condition, an acceleration condition, a constant speed condition, and a load condition.

Through the above solution, when the vehicle is in a target operating condition requiring starting of the engine in the pure electric mode, when the state of the starter is the available state, the start mode is determined to be a starter start mode, which does not occupy the driving capacity of the electric motor. In addition, by providing the isolation relay, the starter can more efficiently control the engine start, and the electrical energy of the auxiliary battery can be supplied to the starter to a maximum extent, so that the starter can start the engine more efficiently.

In some embodiments, the method further includes the following steps.

In step 104, in response to the operating mode of the vehicle being switched from the pure electric mode to a mode other than the pure electric mode, an initial reserved torque is determined.

During specific implementation, the initial reserved torque is the current reserved torque value of the electric motor of the vehicle when the vehicle switches from the pure electric mode to a mode other than the pure electric mode. For example, when the operating mode of the vehicle switches from the pure electric mode to a mode other than the pure electric mode, if the state result of the starter is the available state, the initial reserved torque is zero. When the operating mode of the vehicle switches from the pure electric mode to a mode other than the pure electric mode, if the state result of the starter is the unavailable state, the initial reserved torque is the first torque.

In step 105, the reserved torque is adjusted based on the initial reserved torque and a preset torque gradient.

During specific implementation, after the vehicle exits the pure electric mode, the reserved torque is adjusted from the initial reserved torque based on the preset torque gradient until the reserved torque is adjusted to a target torque.

For example, the target torque is 80 N·m; the initial reserved torque is 50 N·m, and the preset torque gradient refers to an increase of 10 N·m per second. Then, the procedure of restoring to the target torque is: the initial reserved torque is increased from 50 N·m by 10 N·m torque per second until restoring to the target torque of 80 N·m. Meanwhile, if the drive torque of the vehicle is 600 N·m, the actual available drive torque of the vehicle decreases from 550 N·m based on a gradient torque referring to a decrease of 10 N·m per second, until the actual available drive torque of the vehicle decreases to 520 N·m.

In step 106, when adjusting the reserved torque based on the initial reserved torque and the preset torque gradient, in response to detecting an engine start instruction, a second torque of the reserved torque is determined, a magnitude relationship between the second torque and a preset start torque is determined, a target start mode is determined based on the magnitude relationship, and the engine is started based on the target start mode.

During specific implementation, during the procedure of adjusting the reserved torque from the initial reserved torque to the target torque, if an engine start instruction is detected, the second torque to which the reserved torque is adjusted when the engine start instruction is received is determined. Based on the magnitude relationship between the second torque and the start torque required for starting the engine by using the electric motor, the target start mode is determined, and the engine is started based on the target start mode.

The second torque is the torque value to which the reserved torque is adjusted when the engine start instruction is received.

In step 107, after adjusting the reserved torque based on the initial reserved torque and the preset torque gradient, it is determined that the reserved torque reaches the target torque, and the engine is started by using the electric motor based on the target torque in response to detecting an engine start instruction.

During specific implementation, during the procedure of adjusting the reserved torque from the initial reserved torque to the target torque, no engine start instruction is detected. After the adjustment of the reserved torque from the initial reserved torque to the target torque is completed, the target torque is sufficient for the electric motor to start the engine. In response to detecting an engine start instruction, the engine is started by using the electric motor based on the target torque.

In the pure electric mode of the vehicle, the engine is almost non-intervening. Therefore, when the vehicle is in the pure electric mode and the starter is available, the reserved torque is adjusted from the preset default torque to zero. However, after the vehicle exits the pure electric mode (i.e., the vehicle switches from the pure electric mode to a mode other than the pure electric mode), the engine intervenes, and a target torque reserved under a mode other than the pure electric mode is required for the electric motor to start the engine.

The target torque is a torque reserved under a mode other than the pure electric mode for starting the engine by using the electric motor. The mode other than the pure electric mode is an operating mode of the vehicle other than the pure electric mode. The target torque can be the default reserved torque, or a torque value re-determined based on the default reserved torque and a current state parameter of the vehicle.

Through the above solution, after the vehicle exits the pure electric mode, the procedure of restoring to the target torque is to adjust the initial reserved torque to the target torque based on the preset torque gradient. In this way, the actual available drive torque of the vehicle during vehicle driving is also gradually reduced based on the gradient torque without torque jumps, avoiding the influence of the jump change in the actual available drive torque of the vehicle on the vehicle driving, and ensuring good driving experience for the user.

In some embodiments, step 105 includes the following steps.

In step 1051, in response to the initial reserved torque being zero, the initial reserved torque is increased from zero based on the torque gradient until the reserved torque reaches the target torque.

During specific implementation, when the state result of the starter is the available state in the pure electric mode, the reserved torque is zero. When switching from the pure electric mode to a mode other than the pure electric mode, the initial reserved torque is zero. The procedure of adjusting the initial reserved torque to the target torque is: increasing the initial reserved torque from zero based on the torque gradient until the reserved torque reaches the target torque.

In step 1052, in response to the initial reserved torque being the first torque, the first torque is compared with the target torque.

In step 1053, in response to the first torque being larger than or equal to the target torque, the initial reserved torque is decreased from the first torque based on the torque gradient until the reserved torque reaches the target torque.

In step 1054, in response to the first torque being smaller than the target torque, the initial reserved torque is increased from the first torque based on the torque gradient until the reserved torque reaches the target torque.

During specific implementation, when the state result of the starter is the unavailable state in the pure electric mode, the reserved torque is the first torque. When switching from the pure electric mode to a mode other than the pure electric mode, the initial reserved torque is the first torque. The procedure of adjusting the initial reserved torque to the target torque is: comparing the first torque with the target torque, determine whether to increase or decrease the initial reserved torque.

When the first torque is larger than or equal to the target torque, the initial reserved torque is decreased from the first torque based on the torque gradient, and the adjustment is stopped when the value of the reserved torque reaches the target torque. When the first torque is smaller than the target torque, the initial reserved torque is increased from the first torque based on the torque gradient, and the adjustment is stopped when the value of the reserved torque reaches the target torque.

Through the above solution, there are two cases where the initial reserved torque is zero or the first torque. By determining whether the initial reserved torque is zero or the first torque, it is determined whether to adjust from zero to the target torque or from the first torque to the target torque, thereby adjusting the initial reserved torque more accurately.

In some embodiments, step 106 includes the following steps.

In step 1061, in response to the magnitude relationship being that the second torque is larger than or equal to the preset start torque, the target start mode is determined to be an electric-motor start mode, and the engine is started by using the electric motor based on the second torque.

During specific implementation, the start torque is the torque required for starting the engine by using the electric motor. When the second torque is larger than or equal to the start torque, the electric motor can start the engine based on the second torque. The target start mode is determined to be an electric-motor start mode, and the engine is started by using the electric motor based on the second torque.

In step 1062, in response to the magnitude relationship being that the second torque is smaller than the preset start torque, the target start mode is determined to be a starter start mode, power supplied to the functional load is cut off via the isolation relay, and the engine is started by using the starter.

During specific implementation, the start torque is the torque required for starting the engine by using the electric motor. When the second torque is smaller than the start torque, the second torque cannot start the engine by using the electric motor. The target start mode is determined to be a starter start mode, the power supplied to the functional load is cut off via the isolation relay, and the engine is started using the starter.

Through the above solution, the second torque is compared with the start torque required for engine start. When the electric motor can start the engine based on the second torque, the target start mode is determined to be an electric-motor start mode. When the electric motor cannot start the engine based on the second torque, the target start mode is determined to be a starter start mode. In this way, the target start mode can be determined more accurately, and it is ensured that the engine can be started normally.

In some embodiments, the method further includes determining the target torque by the following method.

In step 10A, a current state parameter of the vehicle is obtained, and a target weight coefficient under the mode other than the pure electric mode is determined based on the current state parameter.

In step 10B, the target weight coefficient is multiplied with the default torque to obtain the target torque under the mode other than the pure electric mode.

During specific implementation, under different states of the vehicle, the target torque required for the electric motor to start the engine is also different. To make the determined target torque more accurate, the target torque is determined based on the current state of the vehicle.

First, a current state parameter of the vehicle is obtained, and a target weight coefficient under the mode other than the pure electric mode is determined based on the current state parameter. Then, the target weight coefficient is multiplied with the default reserved torque to obtain the target torque under the mode other than the pure electric mode.

The current state parameter is a parameter related to the current state of the vehicle. The current state parameter includes at least one of: an accelerator pedal position of the vehicle, a current travelling speed of the vehicle, and an ambient temperature of the vehicle.

For example, if the target weight coefficient under the mode other than the pure electric mode determined based on the current state parameter is 0.8, and the default reserved torque is 100 N·m, the target torque under the mode other than the pure electric mode is 80 N·m.

Through the above solution, the target weight coefficient under the mode other than the pure electric mode is determined based on the current state parameter, and the target weight coefficient is multiplied with the default reserved torque to obtain the target torque under the mode other than the pure electric mode. In this way, the influence of the current state of the vehicle on the target torque required for the electric motor to start the engine is considered when determining the target torque, making the determined target torque more accurate.

In some embodiments, step 10A includes the following steps.

In step 10Aa, an accelerator pedal position of the vehicle is obtained, and a first weight coefficient is determined based on the accelerator pedal position.

During specific implementation, when a driver depresses an accelerator pedal, a computer of the vehicle controls an accelerator position of the engine based on a position of the accelerator pedal and a depth at which the pedal is depressed, thereby controlling the magnitude of the torque output by the engine. The larger the depth at which the accelerator pedal is depressed, the larger the torque output by the engine, and the stronger the acceleration performance of the vehicle. The larger the accelerator pedal position of the vehicle, the larger the target torque required for engine start. Therefore, the target torque required for the electric motor of the vehicle to start the engine will gradually increase with the increase of the accelerator pedal position of the vehicle.

The accelerator pedal position of the vehicle is obtained, and the first weight coefficient is determined based on the accelerator pedal position. Specifically, the first weight coefficient corresponding to the current accelerator pedal position of the vehicle can be determined through a pre-stored relationship between the accelerator pedal position and the first weight coefficient.

For example, when the accelerator pedal position is 50%, the first weight coefficient is 1. When the accelerator pedal position is 60%, the first weight coefficient is 1.2. When the accelerator pedal position is 70%, the first weight coefficient is 1.4.

Step 10A includes step 10Aa and/or step 10Ab. In step 10Ab, a current travelling speed of the vehicle is obtained, and a second weight coefficient is obtained based on the current travelling speed.

During specific implementation, the larger the current travelling speed of the vehicle, the easier it is for the engine to be started under the drive of wheels, and the smaller the target torque required for engine start. Therefore, the target torque required for the electric motor of the vehicle to start the engine will gradually decrease with the increase of the current travelling speed of the vehicle.

The current travelling speed of the vehicle is obtained, and the second weight coefficient is determined based on the current travelling speed. Specifically, the second weight coefficient corresponding to the current travelling speed of the vehicle can be determined through a pre-stored relationship between the current travelling speed and the second weight coefficient.

For example, when the current travelling speed is 80 km/h, the second weight coefficient is 1. When the current travelling speed is 100 km/h, the second weight coefficient is 0.8. When the current travelling speed is 120 km/h, the second weight coefficient is 0.6.

Step 10A includes step 10Aa and/or step 10Ab and/or step 10Ac. In step 10Ac, an ambient temperature of the vehicle is obtained, and a third weight coefficient is determined based on the ambient temperature.

During specific implementation, under normal circumstances, in a low-temperature environment, a larger torque is required for the vehicle engine to operate normally when starting. The lower the ambient temperature of the vehicle, the larger the engine load, and the larger the target torque required for engine start. Therefore, the target torque required for the electric motor of the vehicle to start the engine will gradually increase with the decrease of the ambient temperature of the vehicle.

The ambient temperature of the vehicle is obtained, and the third weight coefficient is determined based on the ambient temperature. Specifically, the third weight coefficient corresponding to the current ambient temperature of the vehicle can be determined through a pre-stored relationship between the ambient temperature and the third weight coefficient.

For example, when the ambient temperature is 25°C, the third weight coefficient is 1. When the ambient temperature is 20°C, the third weight coefficient is 1.2. When the ambient temperature is 15°C, the third weight coefficient is 1.4.

In step 10Ad, at least one of the first weight coefficient, the second weight coefficient or the third weight coefficient is set as the target weight coefficient under the mode other than the pure electric mode.

During specific implementation, at least one of the first weight coefficient, the second weight coefficient or the third weight coefficient is used as the target weight coefficient under the mode other than the pure electric mode. The target weight coefficient is multiplied with the default reserved torque to obtain the target torque under the mode other than the pure electric mode.

For example, when the target torque is only influenced by the current travelling speed of the vehicle, the second weight coefficient is used as the target weight coefficient under the mode other than the pure electric mode. For example, if the current travelling speed is 100 km/h, the second weight coefficient is 0.8, i.e., the target weight coefficient is 0.8. The default reserved torque is 100 N·m, and the target torque under the mode other than the pure electric mode at this time is 100 N·m × 0.8 = 80 N·m.

When the target torque is simultaneously influenced by the accelerator pedal position, the current travelling speed, and the ambient temperature of the vehicle, the first weight coefficient, the second weight coefficient, and the third weight coefficient are jointly used as the target weight coefficient. For example, when the accelerator pedal position is 60%, the first weight coefficient is 1.2. When the current travelling speed is 100 km/h, the second weight coefficient is 0.8. When the ambient temperature is 20°C, the third weight coefficient is 1.2. The default reserved torque is 100 N·m, and the target torque under the mode other than the pure electric mode at this time is 100 N·m × 1.2 × 0.8 × 1.2 = 115.2 N·m.

Through the above solution, since the target torque required for the electric motor to start the engine is influenced by a current state parameter such as the accelerator pedal position, the current travelling speed, and the ambient temperature of the vehicle, corresponding weight coefficients are determined respectively based on each current state parameter, thereby determining the target weight coefficient. In this way, the target torque determined based on the target weight coefficient is more accurate.

In some embodiments, determining the current state of the clutch based on the electric-motor speed and the engine speed includes the following steps.

In step 2011, the engine speed is obtained, and it is determined whether the engine speed is zero.

In step 2012, in response to the engine speed being zero, the current state is determined to be an abnormal state.

In step 2013, in response to the engine speed not being zero, the electric-motor speed is obtained, and a speed difference is determined based on the electric-motor speed and the engine speed.

In step 2014, in response to the speed difference being larger than or equal to a preset speed difference threshold for a preset duration, the current state is determined to be an abnormal state.

During specific implementation, a state of the clutch is determined to determine that the state of the clutch is an abnormal state. Specifically, the state of the clutch can be determined to be an abnormal state in the following two modes. Mode 1: the engine speed is obtained; the state of the clutch is determined to be an abnormal state in response to the engine speed being zero, in response to the engine speed not being zero, the electric-motor speed is obtained, and a speed difference is determined based on the electric-motor speed and the engine speed; and the current state of the clutch is determined to be an abnormal state in response to the speed difference being larger than or equal to a preset speed difference threshold for a preset duration. Mode 2: the engine speed is obtained; and the current state of the clutch is determined to be an abnormal state in response to the engine speed being zero. Mode 3: the electric-motor speed and the engine speed are obtained, and a speed difference between the motor and the engine is determined based on the electric-motor speed and the engine speed; and the current state of the clutch is determined to be an abnormal state in response to the speed difference being larger than or equal to a preset speed difference threshold for a preset duration.

Through the above solution, by determining whether the engine speed is zero, or whether there is a speed difference between the engine and the motor for a long time, it can be accurately determined whether the current state of the clutch is an abnormal state, achieving accurate determination of the current state of the clutch.

In some embodiments, after transmitting the target start torque to the engine by using the clutch, the method further includes the following steps.

In step 204, a start result of the engine is determined.

In step 205, in response to the start result of the engine indicating a failed engine start, a count of start failures is determined.

In step 206, an adjustment coefficient is determined based on the count of start failures.

In step 207, the target start torque is multiplied with the adjustment coefficient to obtain a requested start torque of the clutch.

In step 208, in response to receiving the engine start instruction again, the target start torque is increased to obtain the requested start torque.

In step 209, the requested start torque is transmitted to the engine by using the clutch, so that the engine restarts based on the requested start torque.

During specific implementation, after transmitting the target start torque to the engine by using the clutch, the engine starts based on the target start torque, and it is determined whether the engine is successfully started based on the target start torque.

When the engine fails to start based on the target start torque, a count of start failures is recorded. The adjustment coefficient is determined based on the count of start failures. The target start torque and the adjustment coefficient are multiplied to obtain the requested start torque of the clutch. When the engine start instruction is received again, the target start torque is increased to obtain the requested start torque. The clutch is used to transmit the requested start torque to the engine, so that the engine restarts based on the requested start torque.

For example, if the target start torque is 200 N·m, when the count of start failures is 1, the adjustment coefficient is determined to be 1.2, and the requested start torque is 200 N·m × 1.2 = 240 N·m. When the count of start failures is 2, the adjustment coefficient is determined to be 1.4, and the requested start torque is 200 N·m × 1.4 = 280 N·m.

Through the above solution, by multiplying the target start torque and the adjustment coefficient, the determined requested start torque is more accurate. Each time the engine fails to start, the adjustment coefficient corresponding to the count of engine start failures also increases. By multiplying the target start torque by the adjustment coefficient, the larger the count of engine start failures, the larger the determined requested start torque. That is, after each engine start failure, a larger requested start torque is used to re-drag the engine, making the determined requested start torque more consistent with the actual scenario.

In some embodiments, determining the start result of the engine includes the following steps.

In step 2041, a torque transmission time of the target start torque is determined.

In step 2042, in response to the torque transmission time of the target start torque being larger than or equal to a preset time threshold, it is determined that the start result of the engine indicates a failed engine start.

In step 2043, in response to the torque transmission time of the target start torque being smaller than the preset time threshold, it is determined that the start result of the engine indicates a successful engine start.

During specific implementation, timing starts after the target start torque is transmitted to the engine by using the clutch, to obtain the torque transmission time. The preset time threshold is the maximum time for determining a failed engine start if the engine still cannot be successfully started after the target start torque is transmitted to the engine by using the clutch.

The torque transmission time is compared with the preset time threshold to determine whether the engine has failed to start. When the torque transmission time is larger than or equal to the preset time threshold, it indicates that the torque transmission time reaches the preset time threshold while the engine still cannot be successfully started, the start result of the engine is determined to be a failed engine start. When the torque transmission time is smaller than the preset time threshold, it indicates that within the time before the torque transmission time reaches the preset time threshold, the engine can be successfully started, the start result of the engine is determined to be a successful engine start.

In addition, before determining the torque transmission time of the target start torque, it can also be determined whether the engine is successfully started after transmitting the target start torque to the engine by using the clutch. When the engine still cannot be successfully started after transmitting the target start torque to the engine by using the clutch, it is determined whether the engine start has timed out after the target start torque is transmitted to the engine by using the clutch. The specific procedure of determining whether the engine start has timed out is: determining the torque transmission time of the target start torque. When the torque transmission time is larger than or equal to the preset time threshold, it indicates that the engine still cannot be successfully started and the start has timed out, the start result of the engine is determined to be a failed engine start. When the torque transmission time is smaller than the preset time threshold, it indicates that the engine still cannot be successfully started but the start has not timed out, it is further determined whether the engine starts successfully.

Through the above solution, it is determined whether the engine is successfully started after transmitting the target start torque to the engine by using the clutch, and it is further determined whether the engine start has timed out. The start result of the engine is determined by combining the determination of whether the engine is successfully started and whether the engine start has timed out, making the determined engine start result more accurate.

In some embodiments, increasing the initial start torque to obtain the target start torque includes the following steps.

In step 2021, an initial increase gradient is determined.

In step 2022, the initial start torque is increased based on the initial increase gradient to obtain the target start torque.

During specific implementation, the initial increase gradient is a pre-set increase magnitude from the initial start torque to the target start torque. For example, if the initial increase gradient is to increase by a first torque per second, the initial start torque is increased based on the increase magnitude of the first torque per second until the initial start torque is increased to the target start torque.

For example, if the initial start torque is 100 N·m, the target start torque is 200 N·m, and the initial increase gradient is an increase of 10 N·m per second, then the initial start torque of 100 N·m is increased based on the increase magnitude of 10 N·m per second until the initial start torque of 100 N·m is increased to the target start torque of 200 N·m.

Through the above solution, the initial start torque is increased based on the initial increase gradient until the initial start torque is increased to the target start torque, avoiding an abrupt increase in the torque transmitted to the engine via the clutch from the initial start torque to the target start torque, which could affect engine performance.

In some embodiments, step 208 includes the following steps.

In step 208A, the initial increase gradient is multiplied with the adjustment coefficient to obtain a requested increase gradient.

In step 208B, the target start torque is increased based on the requested increase gradient to obtain the requested start torque.

During specific implementation, the requested increase gradient is an increase magnitude from the target start torque to the requested start torque. For example, if the requested increase gradient is to increase by a second torque per second, the target start torque is increased based on the increase magnitude of the second torque per second until the target start torque is increased to the requested start torque.

For example, the initial start torque is 100 N·m, the target start torque is 200 N·m, and the initial increase gradient is an increase of 10 N·m per second. When the count of start failures is 1, the adjustment coefficient is determined to be 1.2, and the requested start torque is 200 N·m × 1.2 = 240 N·m, and the requested increase gradient is an increase of 10 N·m × 1.2 = 12 N·m per second. The target start torque of 200 N·m is increased based on the increase magnitude of 12 N·m per second until the target start torque of 200 N·m is increased to the requested start torque of 240 N·m.

Through the above solution, when the clutch re-drags the engine to start and the target start torque transmitted to the engine via the clutch is increased to the requested start torque, the initial increase gradient is also increased to the requested increase gradient, which can increase the probability of successful engine start and enable the clutch to re-drag the engine more efficiently.

In some embodiments, after step 209, the method further includes the following steps.

In step 209A, a torque transmission time of the requested start torque is determined.

In step 209B, in response to the torque transmission time being smaller than a preset time threshold, it is determined that the engine start is successful, and the count of start failures is reset to zero.

During specific implementation, timing starts after the target start torque is transmitted to the engine by using the clutch, to obtain the torque transmission time. The preset time threshold is the maximum time for determining a failed engine start if the engine still cannot be successfully started after the target start torque is transmitted to the engine by using the clutch.

The torque transmission time is compared with the preset time threshold to determine whether the engine has failed to start. When the torque transmission time is larger than or equal to the preset time threshold, it indicates that the torque transmission time reaches the preset time threshold while the engine still cannot be successfully started, the start result of the engine is determined to be a failed engine start. When the torque transmission time is smaller than the preset time threshold, it indicates that the engine can be successfully started before the torque transmission time reaches the preset time threshold, the start result of the engine is determined to be a successful engine start.

When it is determined that the engine start is successful, the count of start failures is cleared to zero. Alternatively, when a vehicle power-off instruction is received, the count of start failures is cleared to zero.

In addition, when the count of start failures is larger than or equal to the preset count threshold, the control strategy of starting the engine by using the clutch is stopped.

Through the above solution, by resetting the count of start failures to zero, it is avoided that the requested start torque is used to start the engine the next time while the clutch being used to start the engine. When the count of engine start failures reaches the preset failure count threshold, the clutch stops to dragging the engine, which can avoid damage to the clutch and the engine caused by an excessively large determined target start torque.

When an engine start instruction is received, the initial start torque is transmitted to the engine by using the clutch, and the current state of the clutch is determined based on the electric-motor speed and the engine speed. When the current state of the clutch is an abnormal state, the initial start torque is increased to obtain the target start torque. The clutch is used to transmit the target start torque to the engine, so that the engine starts based on the target start torque. By using the increased target start torque to start the engine, the situation where the engine cannot be successfully dragged to start due to an excessively small initial start torque is avoided. The probability of a failed engine start due to poor clutch transmission capability or feedback information distortion can be reduced, the situation of a failed engine start due to clutch abnormality can be avoided to a maximum extent, and the driving experience of the user is ensured.

Through the above embodiment, an operating mode of the vehicle is determined to be a pure electric mode. In response to a state result of a starter being an available state, a reserved torque is adjusted from a preset default torque to zero, i.e., no torque is reserved from a drive torque used for vehicle driving, and the entire drive torque can be used for vehicle driving, which can ensure the power performance and drivability of the entire vehicle in the pure electric mode, optimize the driving experience of a user in the pure electric mode, and start the engine by using the starter in response to a start condition of the engine being satisfied, thereby avoiding a situation where the engine cannot be started due to the reserved torque being adjusted to zero. In response to the state result of the starter being an unavailable state, the reserved torque is adjusted to a first torque smaller than or equal to the default torque, i.e., a smaller torque is reserved from the drive torque for starting the engine, thereby ensuring the power performance of the entire vehicle in the pure electric mode to a maximum extent. When the vehicle is switching from the pure electric mode to a hybrid mode, an initial start torque is transmitted to the engine by using a clutch, a current state of the clutch is determined based on an electric-motor speed and an engine speed. The starting of the engine is controlled based on the current state and the initial start torque, and the initial start torque for starting the engine is adjusted based on the current state, thereby ensuring that the torque transmitted to the engine via the clutch can smoothly start the engine, reducing the probability of a failed engine start due to poor clutch transmission capability or feedback information distortion while ensuring sufficient power performance, avoiding the situation of a failed engine start due to clutch abnormality to a maximum extent, and ensuring the driving experience of the user.

The method of the embodiments of the present disclosure can be executed by a single device, such as a computer or a server. The method of this embodiment can also be applied in a distributed scenario, completed by the cooperation of multiple devices. In such a distributed scenario, one of the multiple devices may only execute one or more steps in the method of the embodiments of the present disclosure, and the multiple devices will interact with each other to complete the method.

Some embodiments of the present disclosure have been described above. Other embodiments are within the scope of the appended claims. In some cases, the actions or steps recited in the claims can be performed in an order different from that in the above embodiments and still achieve desirable results. In addition, the processes depicted in the drawings do not necessarily require the specific order shown or a continuous order to achieve desirable results. In certain implementations, multitasking and parallel processing are also possible or may be advantageous.

Based on the same inventive concept, corresponding to the method of any of the above embodiments, the present disclosure further provides an apparatus for controlling starting of an engine.

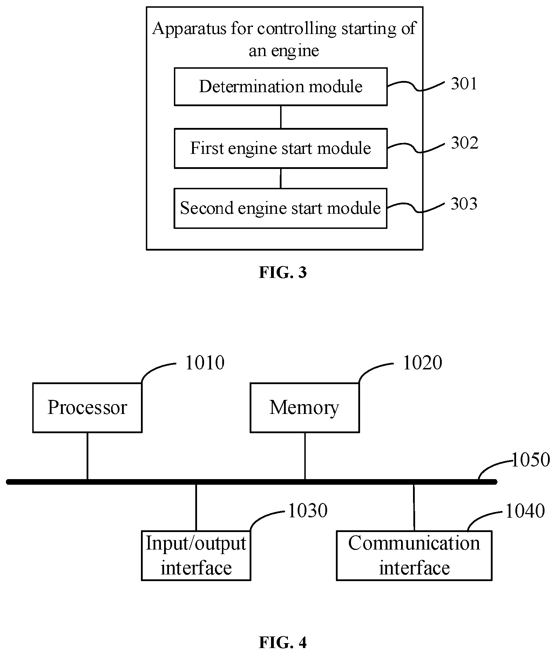

Referring to FIG. 3, the apparatus for controlling starting of the engine includes:
a determination module 301, configured to determine, in response to determining that an operating mode of a vehicle is a pure electric mode, a state of a starter to obtain a state result of the starter;
a first electric-motor start module 302, configured to, in response to the state result of the starter being an available state, adjust a reserved torque from a preset default torque to zero, and start the engine by using the starter in response to a start condition of the engine being satisfied, where the reserved torque is for starting the engine by using an electric motor; and
a second electric-motor start module 303, configured to, in response to the state result of the starter being an unavailable state, adjust the reserved torque to a first torque smaller than or equal to the default torque, and start the engine by using the electric motor based on the first torque in response to the start condition of the engine being satisfied.

In some embodiments, the apparatus for controlling starting of the engine further includes:
a current state determination module 304, configured to, in response to determining that the operating mode of the vehicle is switched from the pure electric mode to a hybrid mode and an engine start instruction is received, transmit an initial start torque to the engine by using a clutch, and determine a current state of the clutch based on an electric-motor speed and an engine speed;
a target start torque determination module 305, configured to, in response to the current state being an abnormal state, increase the initial start torque to obtain a target start torque; and
an engine start control module 306, configured to transmit the target start torque to the engine by using the clutch, where the engine starts based on the target start torque.

In some embodiments, an auxiliary battery on the vehicle is respectively connected to the starter and a functional load, and an isolation relay is connected between the auxiliary battery and the functional load; and
the first engine start module 302 includes:
a first engine start unit, configured to, in response to determining that the start condition of the engine is satisfied, cut off power supplied to the functional load via the isolation relay, and start the engine by using the starter.

In some embodiments, the apparatus further includes:
an initial reserved torque determination module, configured to determine, in response to the operating mode of the vehicle being switched from the pure electric mode to a mode other than the pure electric mode, an initial reserved torque;
a reserved torque adjustment module, configured to adjust the reserved torque based on the initial reserved torque and a preset torque gradient;
a third engine start module, configured to, when adjusting the reserved torque based on the initial reserved torque and the preset torque gradient, in response to detecting an engine start instruction, determine a second torque of the reserved torque, determine a magnitude relationship between the second torque and a preset start torque, determine a target start mode based on the magnitude relationship, and start the engine based on the target start mode; and
a fourth engine start module, configured to, after adjusting the reserved torque based on the initial reserved torque and the preset torque gradient, determine that the reserved torque reaches a target torque, and start the engine by using the electric motor based on the target torque in response to detecting an engine start instruction.

In some embodiments, the reserved torque adjustment module includes:
a first adjustment unit, configured to, in response to the initial reserved torque being zero, increase the initial reserved torque from zero based on the torque gradient until the reserved torque reaches the target torque;
a comparison unit, configured to, in response to the initial reserved torque being the first torque, compare the first torque with the target torque;
a second adjustment unit, configured to, in response to the first torque being larger than or equal to the target torque, decrease the initial reserved torque from the first torque based on the torque gradient until the reserved torque reaches the target torque;
a third adjustment unit, configured to, in response to the first torque being smaller than the target torque, increase the initial reserved torque from the first torque based on the torque gradient until the reserved torque reaches the target torque.

In some embodiments, the third engine start module includes:
an electric motor start unit, configured to, in response to the magnitude relationship being that the second torque is larger than or equal to the preset start torque, determine the target start mode to be an electric-motor start mode, and start the engine by using the electric motor based on the second torque;
a starter start unit, configured to, in response to the magnitude relationship being that the second torque is smaller than the preset start torque, determine the target start mode to be a starter start mode, cut off power supplied to a functional load via an isolation relay, and start the engine by using the starter.

In some embodiments, the apparatus further includes:
a target weight coefficient determination module, configured to obtain a current state parameter of the vehicle, and determine a target weight coefficient under the mode other than the pure electric mode based on the current state parameter;
a target torque determination module, configured to multiply the target weight coefficient by the default torque to obtain the target torque under the mode other than the pure electric mode.

In some embodiments, the target weight coefficient determination module includes:
a first weight coefficient determination unit, configured to obtain an accelerator pedal position of the vehicle, and determine a first weight coefficient based on the accelerator pedal position; and/or
a second weight coefficient determination unit, configured to obtain a current travelling speed of the vehicle, and determine a second weight coefficient based on the current travelling speed; and/or
a third weight coefficient determination unit, configured to obtain an ambient temperature of the vehicle, and determine a third weight coefficient based on the ambient temperature; and
a target weight coefficient determination unit, configured to set at least one of the first weight coefficient, the second weight coefficient or the third weight coefficient as the target weight coefficient under the mode other than the pure electric mode.

In some embodiments, the current state determination module 303 includes:
a determination processing unit, configured to obtain the engine speed, and determine whether the engine speed is zero;
a first abnormal state determination unit, configured to, in response to the engine speed being zero, determine the current state to be an abnormal state;
a speed difference determination unit, configured to, in response to the engine speed not being zero, obtain the electric-motor speed, and determine a speed difference based on the electric-motor speed and the engine speed; and
a second abnormal state determination unit, configured to, in response to the speed difference being larger than or equal to a preset speed difference threshold for a preset duration, determine the current state to be an abnormal state.

In some embodiments, the apparatus further includes: an engine restart control module, where the engine restart control module includes:
an engine start result determination unit, configured to determine a start result of the engine;
a start failure count determination unit, configured to, in response to the start result of the engine indicating a failed engine start, determine a count of start failures;
an adjustment coefficient determination unit, configured to determine an adjustment coefficient based on the count of start failures;
a multiplication processing unit, configured to multiply the target start torque by the adjustment coefficient to obtain a requested start torque of the clutch;
a requested start torque determination unit, configured to, in response to receiving the engine start instruction again, increase the target start torque to obtain the requested start torque; and
an engine restart control unit, configured to transmit the requested start torque to the engine by using the clutch, where the engine restarts based on the requested start torque.

In some embodiments, the engine start result determination unit includes:
a first torque transmission time determination unit, configured to determine a torque transmission time of the target start torque;
a failed engine start determination unit, configured to, in response to the torque transmission time of the target start torque being larger than or equal to a preset time threshold, determine that the start result of the engine indicates a failed engine start;
a successful engine start determination unit, configured to, in response to the torque transmission time of the target start torque being smaller than the preset time threshold, determine that the start result of the engine indicates a successful engine start.

In some embodiments, the target start torque determination module 305 includes:
an initial increase gradient determination unit, configured to determine an initial increase gradient; and
a target start torque determination unit, configured to increase the initial start torque based on the initial increase gradient to obtain the target start torque.

In some embodiments, the requested start torque determination unit includes:
a multiplication processing sub-unit, configured to multiply the initial increase gradient by the adjustment coefficient to obtain a requested increase gradient; and
a requested start torque determination sub-unit, configured to increase the target start torque based on the requested increase gradient to obtain the requested start torque.

In some embodiments, the apparatus further includes: a start failure count clearing module, where the start failure count clearing module includes:
a second torque transmission time determination unit, configured to determine a torque transmission time of the requested start torque; and
a start failure count clearing unit, configured to, in response to the torque transmission time of the requested start torque being smaller than a preset time threshold, determine that the engine start is successful, and reset the count of start failures to zero.

For the convenience of description, the above apparatus is described by dividing functions into various modules. When implementing the present disclosure, the functions of each module can be implemented in the same one or more software and/or hardware.

The apparatus of the above embodiments is used to implement the corresponding engine start control method in any of the preceding embodiments, and has the beneficial effects of the corresponding method embodiments, which will not be repeated here.

Based on the same inventive concept, corresponding to the method of any of the above embodiments, the present disclosure further provides an electronic device, including a memory, a processor, and a computer program stored on the memory and executable on the processor, where the processor executes the program to perform the method for controlling the starting of the engine described in any of the above embodiments.

FIG. 4 shows a more specific hardware structure schematic diagram of an electronic device provided by this embodiment. The device may include: a processor 1010, a memory 1020, an input/output interface 1030, a communication interface 1040 and a bus 1050. The processor 1010, the memory 1020, the input/output interface 1030 and the communication interface 1040 are communicatively connected to each other within the device through the bus 1050.

The processor 1010 can be implemented by a general-purpose CPU (Central Processing Unit), a microprocessor, an Application Specific Integrated Circuit (ASIC), or one or more integrated circuits, etc., for executing relevant programs to implement the technical solutions provided by the embodiments of this specification.

The memory 1020 can be implemented in the form of ROM (Read Only Memory), RAM (Random Access Memory), static storage devices, dynamic storage devices, etc. The memory 1020 can store an operating system and other application programs. When the technical solutions provided by the embodiments of this specification are implemented through software or firmware, the relevant program codes are stored in the memory 1020 and called and executed by the processor 1010.

The input/output interface 1030 is used to connect an input/output module to realize information input and output. The input/output module can be configured as a component in the device (not shown in the figure) or externally connected to the device to provide corresponding functions. The input device can include a keyboard, a mouse, a touch screen, a microphone, various sensors, etc., and the output device can include a display, a speaker, a vibrator, an indicator light, etc.

The communication interface 1040 is used to connect a communication module (not shown in the figure) to realize communication interaction between this device and other devices. The communication module can realize communication through a wired mode (e.g., USB (Universal Serial Bus), network cable, etc.) or a wireless mode (e.g., mobile network, WIFI (Wireless Fidelity), Bluetooth, etc.).

The bus 1050 includes a pathway for transmitting information between various components of the device (e.g., the processor 1010, the memory 1020, the input/output interface 1030, and the communication interface 1040).

Although the above device only shows the processor 1010, the memory 1020, the input/output interface 1030, the communication interface 1040, and the bus 1050, in the specific implementation process, the device may also include other components necessary for normal operation. In addition, those skilled in the art can understand that the above device may also only include components necessary for implementing the solutions of the embodiments of this specification, and does not necessarily include all the components shown in the figures.

The electronic device of the above embodiments is used to implement the corresponding method for controlling the starting of the engine in any of the preceding embodiments, and has the beneficial effects of the corresponding method embodiments, which will not be repeated here.

Based on the same inventive concept, corresponding to the method of any of the above embodiments, the present disclosure further provides a non-transitory computer-readable storage medium, the non-transitory computer-readable storage medium storing computer instructions, the computer instructions being used to cause the computer to execute the method for controlling the starting of the engine described in any of the above embodiments.

The computer-readable medium of this embodiment includes permanent and non-permanent, removable and non-removable media, and information storage can be implemented by any method or technology. The information can be computer-readable instructions, data structures, program modules, or other data. Examples of computer storage media include, but are not limited to, Phase-change Random Access Memory (PRAM), Static Random Access Memory (SRAM), Dynamic Random Access Memory (DRAM), other types of Random Access Memory (RAM), Read Only Memory (ROM), Electrically Erasable Programmable Read Only Memory (EEPROM), flash memory or other memory technologies, Compact Disc Read Only Memory (CD-ROM), Digital Versatile Disc (DVD) or other optical storage, magnetic cassette tape, tape magnetic disk storage or other magnetic storage devices, or any other non-transmission medium, which can be used to store information that can be accessed by a computing device.

The computer instructions stored in the storage medium of the above embodiments are used to cause the computer to execute the method for controlling the starting of the engine described in any of the above embodiments, and have the beneficial effects of the corresponding method embodiments, which will not be repeated here.

Based on the same inventive concept, corresponding to the method of any of the above embodiments, the present disclosure further provides a vehicle, including the apparatus for controlling the starting of the engine in the above embodiments, or the electronic device, or the storage medium, where the vehicle implements the method for controlling the starting of the engine described in any of the above embodiments.

The vehicle of the above embodiments is used to implement the method for controlling the starting of the engine described in any of the preceding embodiments, and has the beneficial effects of the corresponding method embodiments, which will not be repeated here.

A person of ordinary skill in the art should understand that the discussion of any of the above embodiments is merely exemplary and is not intended to imply that the scope of the present disclosure (including the claims) is limited to these examples; under the idea of the present disclosure, technical features in the above embodiments or different embodiments can also be combined, steps can be implemented in any order, and there are many other variations of the different aspects of the embodiments of the present disclosure as described above, which are not provided in detail for the sake of brevity.

In addition, to simplify the illustration and discussion, and to avoid making the embodiments of the present disclosure difficult to understand, well-known power/ground connections to integrated circuit (IC) chips and other components may or may not be shown in the provided drawings. Furthermore, apparatus may be shown in block diagram form in order to avoid making the embodiments of the present disclosure difficult to understand, and this also takes into consideration the fact that details regarding the implementation of these block diagram apparatus are highly dependent on the platform on which the embodiments of the present disclosure will be implemented (i.e., these details should fall within the understanding of a person skilled in the art). Specific details (e.g., circuits) are set forth to describe exemplary embodiments of the present disclosure, it will be apparent to a person skilled in the art that the embodiments of the present disclosure can be practiced without these specific details or with variations thereof. Therefore, these descriptions are to be considered illustrative rather than restrictive.

Although the present disclosure has been described in conjunction with specific embodiments thereof, many substitutions, modifications, and variations of these embodiments will be apparent to a person of ordinary skill in the art based on the foregoing description. For example, other memory architectures (e.g., Dynamic RAM (DRAM)) may be used with the discussed embodiments.

The embodiments of the present disclosure are intended to cover all such substitutions, modifications, and variations that fall within the broad scope of the appended claims. Therefore, any omission, modification, equivalent substitution, improvement, etc., made within the spirit and principles of the embodiments of the present disclosure shall be included within the protection scope of the present disclosure.

## Claims

1. A method for controlling starting of an engine, comprising:
determining, in response to determining that an operating mode of a vehicle is a pure electric mode, a state of a starter to obtain a state result of the starter;
in response to the state result of the starter being an available state, adjusting a reserved torque from a default torque to zero, and starting the engine by using the starter in response to a start condition of the engine being satisfied, wherein the reserved torque is for starting the engine by using an electric motor; and
in response to the state result of the starter being an unavailable state, adjusting the reserved torque to a first torque smaller than or equal to the default torque, and starting the engine by using the electric motor based on the first torque in response to the start condition of the engine being satisfied.

2. The method according to claim 1, further comprising:
in response to determining that the operating mode of the vehicle is switched from the pure electric mode to a hybrid mode and an engine start instruction is received, transmitting an initial start torque to the engine by using a clutch, and determining a current state of the clutch based on an electric-motor speed and an engine speed;
in response to the current state being an abnormal state, increasing the initial start torque to obtain a target start torque; and
transmitting the target start torque to the engine by using the clutch, wherein the engine starts based on the target start torque.

3. The method according to claim 1, wherein an auxiliary battery on the vehicle is respectively connected to the starter and a functional load, and an isolation relay is connected between the auxiliary battery and the functional load; and
wherein starting the engine by using the starter in response to the start condition of the engine being satisfied comprises:
in response to determining that the start condition of the engine is satisfied, cutting off power supplied to the functional load via the isolation relay, and starting the engine by using the starter.

4. The method according to claim 1, further comprising:
determining, in response to the operating mode of the vehicle being switched from the pure electric mode to a mode other than the pure electric mode, an initial reserved torque;
adjusting the reserved torque based on the initial reserved torque and a preset torque gradient;
when adjusting the reserved torque based on the initial reserved torque and the preset torque gradient, in response to detecting an engine start instruction, determining a second torque of the reserved torque, determining a magnitude relationship between the second torque and a preset start torque, determining a target start mode based on the magnitude relationship, and starting the engine based on the target start mode; and
after adjusting the reserved torque based on the initial reserved torque and the preset torque gradient, determining that the reserved torque reaches a target torque, and starting the engine by using the electric motor based on the target torque in response to detecting an engine start instruction.

5. The method according to claim 4, wherein adjusting the reserved torque based on the initial reserved torque and the preset torque gradient comprises:
in response to the initial reserved torque being zero, increasing the initial reserved torque from zero based on the torque gradient until the reserved torque reaches the target torque;
in response to the initial reserved torque being the first torque, comparing the first torque with the target torque;
in response to the first torque being larger than or equal to the target torque, decreasing the initial reserved torque from the first torque based on the torque gradient until the reserved torque reaches the target torque;
in response to the first torque being smaller than the target torque, increasing the initial reserved torque from the first torque based on the torque gradient until the reserved torque reaches the target torque.

6. The method according to claim 4, wherein determining the target start mode based on the magnitude relationship, and starting the engine based on the target start mode comprises:
in response to the magnitude relationship being that the second torque is larger than or equal to the preset start torque, determining the target start mode to be an electric-motor start mode, and starting the engine by using the electric motor based on the second torque;
in response to the magnitude relationship being that the second torque is smaller than the preset start torque, determining the target start mode to be a starter start mode, cutting off power supplied to a functional load via an isolation relay, and starting the engine by using the starter.

7. The method according to claim 4, further comprising determining the target torque by:
obtaining a current state parameter of the vehicle, and determining a target weight coefficient under the mode other than the pure electric mode based on the current state parameter; and
multiplying the target weight coefficient by the default torque to obtain the target torque under the mode other than the pure electric mode.

8. The method according to claim 7, wherein obtaining the current state parameter of the vehicle, and determining the target weight coefficient under the mode other than the pure electric mode based on the current state parameter comprises:
obtaining an accelerator pedal position of the vehicle, and determining a first weight coefficient based on the accelerator pedal position; and/or
obtaining a current travelling speed of the vehicle, and determining a second weight coefficient based on the current travelling speed; and/or
obtaining an ambient temperature of the vehicle, and determining a third weight coefficient based on the ambient temperature; and
setting at least one of the first weight coefficient, the second weight coefficient or the third weight coefficient as the target weight coefficient under the mode other than the pure electric mode.

9. The method according to claim 2, wherein determining the current state of the clutch based on the electric-motor speed and the engine speed comprises:
obtaining the engine speed, and determining whether the engine speed is zero;
in response to the engine speed being zero, determining the current state to be an abnormal state;
in response to the engine speed not being zero, obtaining the electric-motor speed, and determining a speed difference based on the electric-motor speed and the engine speed; and
in response to the speed difference being larger than or equal to a preset speed difference threshold for a preset duration, determining the current state to be an abnormal state.

10. The method according to claim 2, wherein after transmitting the target start torque to the engine by using the clutch, the method further comprises:
determining a start result of the engine;
in response to the start result of the engine indicating a failed engine start, determining a count of start failures;
determining an adjustment coefficient based on the count of start failures;
multiplying the target start torque by the adjustment coefficient to obtain a requested start torque of the clutch;
in response to receiving the engine start instruction again, increasing the target start torque to obtain the requested start torque; and
transmitting the requested start torque to the engine by using the clutch, wherein the engine restarts based on the requested start torque.

11. The method according to claim 10, wherein determining the start result of the engine comprises:
determining a torque transmission time of the target start torque;
in response to the torque transmission time of the target start torque being larger than or equal to a preset time threshold, determining that the start result of the engine indicates a failed engine start;
in response to the torque transmission time of the target start torque being smaller than the preset time threshold, determining that the start result of the engine indicates a successful engine start.

12. The method according to claim 10, wherein increasing the initial start torque to obtain the target start torque comprises:
determining an initial increase gradient; and
increasing the initial start torque based on the initial increase gradient to obtain the target start torque.

13. The method according to claim 12, wherein increasing the target start torque to obtain the requested start torque comprises:
multiplying the initial increase gradient by the adjustment coefficient to obtain a requested increase gradient; and
increasing the target start torque based on the requested increase gradient to obtain the requested start torque.

14. The method according to claim 10, wherein after transmitting the requested start torque to the engine by using the clutch, the method further comprises:
determining a torque transmission time of the requested start torque; and
in response to the torque transmission time of the requested start torque being smaller than a preset time threshold, determining that the engine start is successful, and resetting the count of start failures to zero.

15. A vehicle, wherein the vehicle implements the method according to any one of claims 1 to 14 during operation.
